# EUROPEAN PATENT APPLICATION

(11) **EP 2 487 510 A1**
(43) Date of publication of application: **15.08.2012**
(21) Application number: 11275023.7
(22) Date of filing: 10.02.2011
(51) Int. Cl.: G01T 1/26

(54) **Diamond radiation detector**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A radiation detector (1), comprising: a cathode (2), a diamond slice (4), an anode (8); and optionally a dynode (6), located in a substantially evacuated enclosure or otherwise operated in a vacuum. The diamond slice (4) and the dynode (6) may be one of a plurality of diamond slice (4) and dynode (6) pairs, each pair providing a gain stage of a multiple gain configuration. A first surface (20) of the diamond slice (4) may comprise a plurality of indentations (24), aligned for example with gaps (28) in the cathode (2). A second surface (22) of the diamond slice (4) may comprise a plurality of protrusions (26), aligned for example with gaps (30) in the dynode (6). The detector may be used to detect one or more of the following: i) short wave UV radiation; ii) high energy electrons/beta radiation; iii) high energy neutrons; and iv) low energy neutrons.

## Description

### FIELD OF THE INVENTION

The present invention relates to detection of radiation. The present invention relates in particular to, but is not limited to, detection of one or more of the following: beta radiation (high energy electrons), photons, neutrons, and gamma radiation.

### BACKGROUND

It is known to use diamond for detection of radiation. Diamond is particularly resilient to radiation and thermal damage when used in high radiation environments. However, diamond is a very insensitive radiation detector, and hence requires large amplification to be applied to its detection output signal.

Conventionally, an excitation voltage of e.g. 500V to 2kV is applied across the diamond, and amplification is performed by passing the output signal through a high gain electronic amplification circuit.

In detection technical fields that are entirely separate from technical fields that employ diamond as a detector of radiation, photomultipliers (often referred to as "photomultiplier tubes") are known. In photomultipliers, scintillator materials and secondary emission materials are used in combination. The combination of scintillator material and secondary emission material operates in a fundamentally different manner to how diamond responds to radiation.

Entirely separate from the use of diamond, or indeed any material, as a radiation detector, efforts have been made to develop electronics functionality based on diamond. One example is the development of diamond valves (e.g. diodes) that make use of a phenomenon called "negative electron affinity" in which electrons are made to stream from diamond microtips towards linear anodes.

### SUMMARY OF THE INVENTION

In a first aspect, the present invention provides a radiation detector, comprising: a cathode, a diamond slice, and an anode; wherein the cathode, diamond slice, and anode are arranged to be operated in an evacuated enclosure or a vacuum.

The radiation detector may further comprise a dynode arranged to be operated in the evacuated enclosure or vacuum.

The radiation detector may further comprise an enclosure in which the cathode, diamond slice, and anode, and when included, the dynode, are located, and wherein the enclosure is substantially evacuated.

The diamond slice and the dynode may be one pair of a plurality of diamond slice and dynode pairs, each pair providing a respective gain stage of a multiple gain configuration.

A first surface of the diamond slice may comprise a plurality of indentations.

A second surface of the diamond slice may comprise a plurality of protrusions.

The cathode may comprise a plurality of gaps.

The gaps of the cathode may be aligned with the indentations.

The dynode may comprise a plurality of gaps.

The gaps of the dynode may be aligned with the protrusions.

The cathode may be in the form of a thin film layer deposited on a surface of the diamond slice or on one or more other layers deposited on the diamond slice.

The dynode may be in the form of a thin film layer deposited on a surface of the diamond slice or on one or more other layers deposited on the diamond slice.

In a further aspect, the present invention provides use of a radiation detector according to any of the above mentioned aspects or options.

The radiation may be one or more of the following:
i) short wave UV radiation;
ii) high energy electrons/beta radiation;
iii) high energy neutrons; and
iv) low energy neutrons.

When detecting short wave UV radiation, the use may further comprise admitting UV via a scintillator crystal or fibre optic bundle.

When detecting low energy neutrons, the use may further comprise using an activation layer.

### BRIEF DESCRIPTION OF THE DRAWINGS

Figure 1 is a schematic illustration (not to scale) of a radiation detector;
Figure 2 is schematic illustration (not to scale) showing a schematic exploded perspective view of small representative areas of certain components of the radiation detector of Figure 1;
Figure 3 is a schematic illustration (not to scale) of certain components of another radiation detector 1; and
Figure 4 is a schematic illustration (not to scale) of another radiation detector 1.

### DETAILED DESCRIPTION

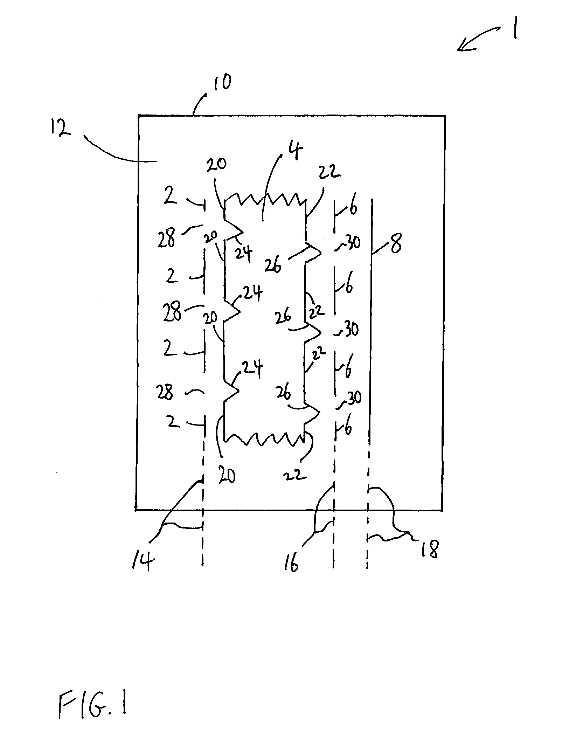

Figure 1 is a schematic illustration (not to scale) of an embodiment of a radiation detector 1. The radiation detector 1 comprises the following substantially planar components arranged in a spaced apart manner, and aligned in the following order: a cathode 2, a diamond slice 4, a dynode 6, and an anode 8. In this embodiment, each of these components is square-shaped with dimensions of approximately 4 mm by 4 mm. Figure 1 shows the radiation detector in a schematic cross-sectional representation.

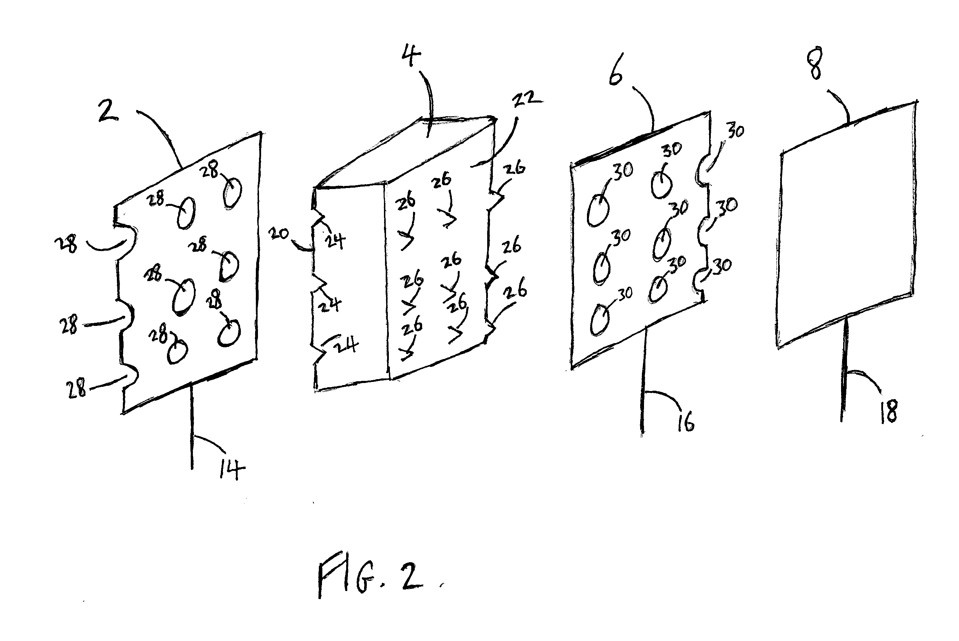

Figure 2 is schematic illustration (not to scale) showing a schematic exploded perspective view of small representative areas of the above mentioned components of the radiation detector, i.e. the cathode 2, the diamond slice 4, the dynode 6, and the anode 8.

The radiation detector 1 will now be described in more detail, with reference to both Figure 1 and Figure 2.

The above mentioned components, i.e. the cathode 2, the diamond slice 4, the dynode 6, and the anode 8, are enclosed in a vacuum enclosure 10, in which is provided a vacuum 12 such that these components are surrounded by the vacuum 12. The vacuum enclosure can be made of any appropriate material, for example glass or quartz (note the use of quartz is suitable for UV transmission therethrough).

The cathode 2 is electrically coupled to a cathode connection 14, that extends out of the vacuum enclosure 10 through a seal (not shown) to allow the cathode 2 to be electrically coupled to control and measurement apparatus (not shown).

The dynode 6 is electrically coupled to a dynode connection 16, that extends out of the vacuum enclosure 10 through a seal (not shown) to allow the dynode 6 to be electrically coupled to the control and measurement apparatus (not shown).

The anode 8 is electrically coupled to an anode connection 18, that extends out of the vacuum enclosure 10 through a seal (not shown) to allow the anode 8 to be electrically coupled to the control and measurement apparatus (not shown).

In this embodiment, the diamond slice is made from single crystal diamond, and is 200 µm thick. with vacuum deposition layers added to provide indentations and protrusions as described in more detail later below. In other embodiments, any other appropriate thickness may be used, for example in the range of 100 µm to 300 µm.

The diamond slice 4 comprises two substantially planar surfaces, namely a first surface 20 that faces the cathode 2, and a second surface 22 that faces the dynode 6. As mentioned above, each surface is approximately of area 4 mm by 4mm.

In this embodiment, the first surface 20 comprises spaced apart indentations 24. The indentations 24 are in the form of cone shaped hollows. The remainder of the first surface 20 (i.e. the surface area except for the locations of the indentations 24), is substantially planar. Indeed, since the indentations 24 represent only a small proportion of the total surface area, the first surface 20 may be considered, in relation to the overall dimensions of the radiation detector 1, as a substantially planar surface. In this embodiment there are approximately two million indentations 24 spaced approximately evenly over the first surface 20 of the diamond slice 4. Each indentation 24 has a maximum opening, width or diameter approximately 10 µm and has a height of approximately 10 µm and is e.g. a cone or a pyramid.

In this embodiment, the second surface 22 comprises spaced apart protrusions 26. The protrusions 26 are cone shaped. The remainder of the second surface 22 (i.e. the surface area except for the locations of the protrusions 26), is substantially planar. Indeed, since the protrusions 26 represent only a small proportion of the total surface area, the second surface 22 may be considered, in relation to the overall dimensions of the radiation detector 1, as a substantially planar surface. In this embodiment there are approximately two million protrusions 26 spaced approximately evenly over the second surface 22 of the diamond slice 4. Each protrusion 26 has a base of maximum extension, width or diameter approximately 10 µm and has a height of approximately 10 µm and is e.g. a cone or a pyramid.

The cathode 14, the dynode 16, and the anode 18 are each made of an electrically conducting material, for example titanium, nickel, tungsten, graphite and so on.

In this embodiment, the cathode 14 is a plate of thickness approximately 200 µm comprising plural gaps (or holes) 28. The gaps 28 are aligned with respective indentations 24 of the diamond slice 4.

Correspondingly, in this embodiment, the anode 8 is a plate of thickness approximately 200 µm comprising plural gaps (or holes) 30. The gaps 30 are aligned with respective protrusions 26 of the diamond slice 4.

In this embodiment, the anode 8 is simply a plate (without gaps) of thickness approximately 200 µm.

The specific components described above may each be manufactured by any suitable process, e.g. etching.

In this embodiment, the cathode 2, dynode 6 and the anode 8 are made from metal foil, and the gaps 28 and 30 in particular are provided by etching.

In this embodiment, the indentations 24 and protrusions 26 are formed by selective chemical vapour deposition onto the surfaces of the single crystal slice. However, in other embodiments, the whole slice may be manufactured using chemical vapour deposition. In yet further embodiments, any other appropriate method may be used, or any appropriate combination of methods may be used.

In this embodiment, the cathode 2 and the dynode 16 are isolated from each other by insulating material e.g. ceramic or mica, and operate electrostatically.

In this embodiment, the various components are maintained/driven at the following voltages: the cathode is maintained at 0 V, or negative in relation to the dynode and anode; the dynode is held 40 V more positive than the cathode.

In operation, when radiation impinges on the diamond slice, (in this embodiment, most significantly when radiation impinges on the indentations 24) electrons are released from the diamond. The electrons flow in the bulk diamond material of the diamond slice 4, and are elctrostatically attracted to the dynode 6. By negative electron affinity relatively large numbers of electrons are emitted from the protrusions 26, and collected by the anode 8. The output signal is then acquired, in conventional fashion, from circuitry (not shown) connected to the cathode connection 14 and the anode connection 18. For example, the output may be a current that can feed into a current amplifier or it can be directed through a resistor to yield a voltage to be fed into a voltage amplifier.

In general, the overall structure, and operation, of the radiation detector 1 corresponds to that of a conventional photomultiplier tube, except where any of the above mentioned details differ from such a conventional photomultiplier tube.

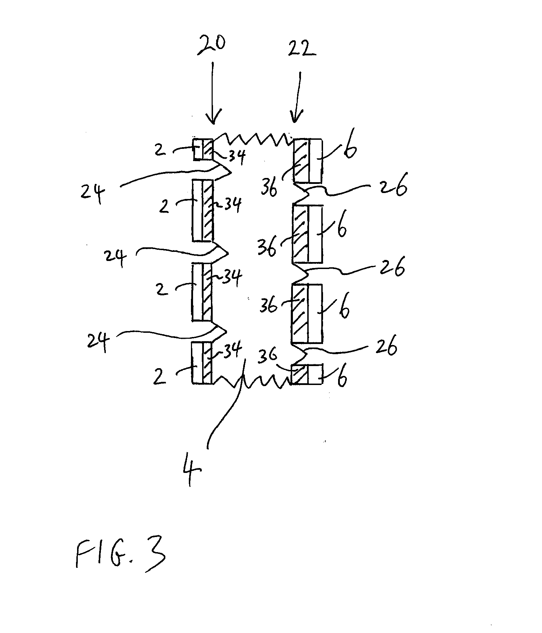

In the above embodiments, the cathode 2 and the dynode are provided in the forms of plates. However, this need not be the case, and in other embodiments they are provided in other ways. One possibility is for the cathode and/or dynode to be deposited in the form of a thin layer on the diamond slice. One such embodiment will now be described with reference to Figure 3.

Figure 3 is a schematic illustration (not to scale) of certain components, in particular the cathode 2, diamond slice 4, and anode 8, of one such further embodiment of a radiation detector 1. Figure 3 shows these elements in a schematic cross-sectional representation. In Figure 3, the same reference numerals are used for the corresponding components described with reference to Figures 1 and 2.

A first thin film insulator layer 34 is deposited on the first surface 20 of the diamond slice 4. In corresponding fashion, a second thin film insulator layer 36 is deposited on the second surface 22 of the diamond slice 4. Any appropriate material may be used for the insulating layers 34, 36. In this embodiment the thin film insulator layers 34, 36 are of SiO₂. The cathode 2 is deposited in the form of a thin layer of conducting material over the first thin film insulator layer 34. In corresponding fashion, the dynode 6 is deposited in the form of a thin layer of conducting material over the second thin film insulator 36. Any appropriate material may be used for the thin layers of conducting material. In this embodiment the thin layers of conducting material are of indium tin oxide.

In this embodiment, the thin film insulator layers 34, 36 and the conducting material layers are deposited in areas of the first and second surfaces 20, 22 other than the areas where the indentations 24 and protrusions 26 are located respectively. This is achieved by conventional masking techniques. However, this need not be the case, and in other embodiments the thin film insulator layers 34, 36 and the conducting material layers are also deposited in areas of the first and second surfaces 20, 22 where the indentations 24 and protrusions 26 are located respectively. Also, in other embodiments, plural insulating layers may be deposited on the diamond surface before the conducting material layer is deposited.

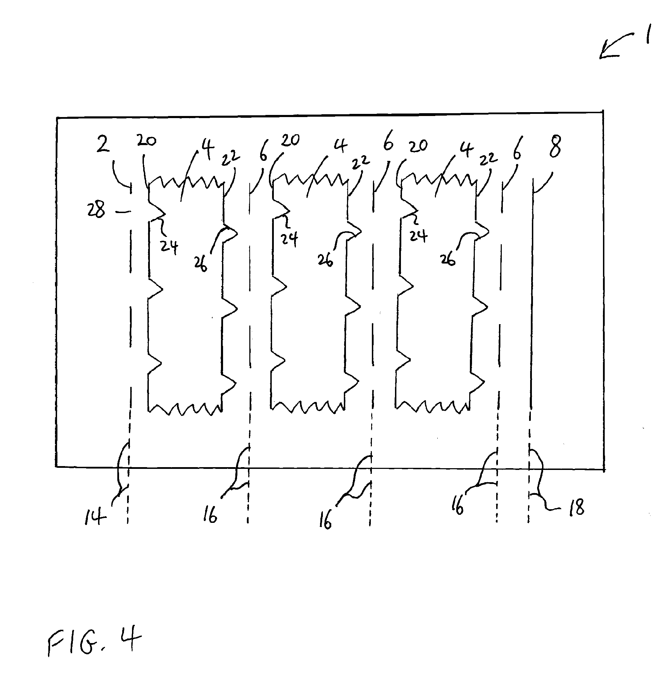

In the above embodiments, the radiation detector comprises only one diamond slice 4 and only one dynode 6. However, this need not be the case, and in other embodiments plural diamond slices 4, with plural corresponding respective dynodes 6, are provided between the cathode 2 and the anode 8. One such embodiment will now be described with reference to Figure 4.

Figure 4 is a schematic illustration (not to scale) of one such further embodiment of a radiation detector 1, in which plural diamond slices 4, with plural corresponding respective dynodes 6, are provided between the cathode 2 and the anode 8. In this embodiment three such pairs are provided, however this number is not essential, and in other embodiments other numbers of pairs are provided. In Figure 4, the same reference numerals are used for the corresponding components described with reference to Figures 1 and 2.

In this embodiment, the radiation detector 1 comprises the following substantially planar components arranged in a spaced apart manner, and aligned in the following order: a cathode 2, plural diamond slice-dynode pairs, and an anode 8. Each diamond slice-dynode pair comprises a respective diamond slice 4 arranged next to a respective dynode 6. In this embodiment, each of these components is square-shaped with dimensions of approximately 4 mm by 4 mm. Figure 1 shows the radiation detector in a schematic cross-sectional representation.

The cathode 2 is electrically coupled to a cathode connection 14, that extends out of the vacuum enclosure 10 through a seal (not shown) to allow the cathode 2 to be electrically coupled to control and measurement apparatus (not shown).

Each of the dynodes 6 is electrically coupled to a respective dynode connection 16, that extends out of the vacuum enclosure 10 through a seal (not shown) to allow the dynodes 6 to be electrically coupled to the control and measurement apparatus (not shown).

The anode 8 is electrically coupled to an anode connection 18, that extends out of the vacuum enclosure 10 through a seal (not shown) to allow the anode 8 to be electrically coupled to the control and measurement apparatus (not shown).

In this embodiment, each individual component is of the same materials, dimensions and so on as in the first embodiment described above with reference to Figures 1 and 2.

In this embodiment, the various components are maintained/driven at the same voltages as employed in the first embodiment described above with reference to Figures 1 and 2, except that each additional dynode 6 is held more positive than its predecessor, for example 40 V more positive.

In this embodiment, operation is the same as for the first embodiment described above with reference to Figures 1 and 2, except that the additional diamond slice-dynode pairs provide respective additional gain stages, i.e. the radiation detector 1 of this embodiment provides multiple gain stages.

The various dimensions of various components in the above described embodiments are not essential, and in other embodiments any one or more of those dimensions may be different to those given above.

In the above mentioned embodiments the diamond slice is made from single crystal diamond. However this is not essential, and in other embodiments polycrystalline intrinsic diamond may be used instead.

In those embodiments where the cathode and/or dynode(s) is formed from a single plate, or in any other manner, an insulator may be provided between the plate and the crystal slice, or otherwise positioned around the cathode and/or dynode(s).

In the above embodiments, the indentations and the protrusions are cone shaped. However this is not essential, and in other embodiments, the indentations and/or the protrusions may be of different shape to a cone.

In the above embodiments, the indentations and protrusions are approximately uniformly distributed over their respective diamond slice surfaces. However this is not essential, and in other embodiments the indentations and/or the protrusions are non-uniformly distributed over their respective diamond slice surfaces.

In the above embodiments, the number of indentations is approximately equal to the number of protrusions. However this is not essential, and in other embodiments the number of indentations is significantly different to the number of protrusions.

Indeed, the inclusion of indentations and protrusions is not in itself essential, and accordingly in other embodiments the indentations and/or the protrusions may be omitted.

In the above embodiments, the gaps in the cathode are aligned with respective indentations of the diamond slice, and the gaps in the dynode(s) are aligned with respective protrusions of the diamond slice(s). However, this need not be the case, and in other embodiments the gaps in the cathode are not aligned with respective indentations of the diamond slice, and/or the gaps in the dynode(s) are not aligned with respective protrusions of the diamond slice(s).

In yet further embodiments, the diamond slice and the dynode are positioned sufficiently close to each other that the tips of the protrusions protrude/extend through the gaps in the dynode. This can provide increased emission efficiency. However, a disadvantage is that fabrication is more difficult, i.e. an advantage of the earlier described embodiments where the tips of the protrusions do not extend through the gaps in the dynode is that fabrication is easier. This is particularly advantageous where a multiple gain stage is provided since the easier fabrication is achieved more than once, and furthermore there is synergy with the fact that the multiple gain provided alleviates any decrease in efficiency compared to an arrangement where the tips do protrude through the dynode.

In the above embodiments, the cathode and the dynode(s) are isolated, and operate electrostatically. However, this is not essential, and in other embodiments the cathode and the dynode(s) are ohmic, and operate similarly to a metal film resistor.

In the above embodiment described with reference to Figure 3, both the cathode and dynode are provided by thin film deposition onto a thin film insulator layer which has itself been provided by thin film deposition on the surface of the diamond slice. However, this is not essential, and in other embodiments only one or other of the cathode or the dynode is provided in this manner, and the other of those is provided in some other manner, for example in the form of a plate. Corresponding possibilities apply to the plural diamond slice-dynode pairs in those embodiments where the radiation detector comprises plural diamond slice-dynode pairs.

In the above embodiment described with reference to Figure 3, or the embodiments mentioned in the preceding paragraph, either or both the cathode and dynode are provided by thin film deposition onto a thin film insulator layer which has itself been provided by thin film deposition on the surface of the diamond slice. However the inclusion of the thin film insulator layer is not essential, and in other embodiments the thin film insulator may be omitted, i.e. the conducting layer providing the cathode/dynode may be deposited directly onto the surface of the diamond slice, for either the cathode or the dynode. Corresponding possibilities apply to the plural diamond slice-dynode pairs in those embodiments where the radiation detector comprises plural diamond slice-dynode pairs.

Also, in further embodiments, when there is only one diamond slice, the dynode is omitted.

The following are examples of types of radiation or particles that the radiation detector can be used to detect:
i) Short wave UV radiation, e.g. < 240 nm.
ii) High energy electrons (beta radiation).
iii) High energy neutrons, e.g. > 5.8 MeV.
iv) Low energy neutrons.

In the case of short wave radiation, embodiments may be provided in which the UV may be admitted via a scintillator crystal or fibre optic bundle. For example barium fluoride crystals may be used to scintillate in the UV in response to high energy neutrons.

In the case of low energy neutrons, embodiments may be provided in which an activation layer, for example lithium-6 fluoride is employed. For example lithium-6 fluoride may be used to capture low energy neutrons and release energy to cause UV emission from a fluorescent material.

The following are further examples of applications where the radiation detector can advantageously be used:
i) As an electron multiplier for the detection of electrons in space applications using the vacuum of space as a container. In other words, in further embodiments, the vacuum enclosure may be omitted if the radiation detector is to be used in-situ in an environment where there is a sufficiently low concentration vacuum.
ii) As an electron multiplier for use in low light television camera tubes, for example image orthicon and image isocon types of tubes. Such tubes can detect photons from crystal or fibre scintillators for neutron and gamma radiation detection.
iii) As a photo-electron multiplier for use in Farnsworth image dissector tube star trackers and Utilicon type tubes. This application tends to benefit from having no heated cathode to form a scanning electron beam.

The above embodiments tend to provide a resilient radiation detector, due to the resilience of diamond. Moreover, amplification is in effect provided within the radiation-resilient environment of the diamond, and hence vulnerabilities of conventional amplification approaches such as electronic circuits tend to be alleviated or avoided. This advantage is further enhanced in embodiments where multiple gain stages are provided, as accumulative gain is provided within the radiation-resilient environment of the multiple diamond stages.

## Claims

1. A radiation detector (1), comprising:
a cathode (2), a diamond slice (4), and an anode (8);
wherein the cathode (2), diamond slice (4), and anode (8) are arranged to be operated in an evacuated enclosure or a vacuum.

2. A radiation detector (1) according to claim 1, further comprising a dynode (6) arranged to be operated in the evacuated enclosure or vacuum.

3. A radiation detector (1) according to claim 1 or claim 2, further comprising an enclosure (10) in which the cathode (2), diamond slice (4), and anode (8), and when dependent from claim 2 the dynode (6), are located, and wherein the enclosure (10) is substantially evacuated.

4. A radiation detector (1) according to claim 2 or claim 3, wherein the diamond slice (4) and the dynode (6) are one pair of a plurality of diamond slice (4) and dynode (6) pairs, each pair providing a respective gain stage of a multiple gain configuration.

5. A radiation detector (1) according to any of claims 1 to 4, wherein a first surface (20) of the diamond slice (4) comprises a plurality of indentations (24).

6. A radiation detector (1) according to any of claims 1 to 5, wherein a second surface (22) of the diamond slice (4) comprises a plurality of protrusions (26).

7. A radiation detector (1) according to any of claims 1 to 6, wherein the cathode (2) comprises a plurality of gaps (28).

8. A radiation detector (1) according to claim 7 when dependent from claim 5, wherein the gaps (28) of the cathode (2) are aligned with the indentations (24).

9. A radiation detector (1) according to any of claims 1 to 8, wherein the dynode (6) comprises a plurality of gaps (30).

10. A radiation detector (1) according to claim 9 when dependent from claim 6, wherein the gaps (30) of the dynode (6) are aligned with the protrusions (26).

11. A radiation detector (1) according to any of claims 1 to 10, wherein the cathode (2) is in the form of a thin film layer deposited on a surface of the diamond slice (4) or on one or more other layers (34) deposited on the diamond slice (4).

12. A radiation detector (1) according to any of claims 1 to 11, wherein the dynode (6) is in the form of a thin film layer deposited on a surface of the diamond slice (4) or on one or more other layers (36) deposited on the diamond slice (4).

13. Use of a radiation detector (1) according to any of claims 1 to 12 to detect radiation.

14. Use according to claim 13, wherein the radiation is one or more of the following:
i) short wave UV radiation;
ii) high energy electrons/beta radiation;
iii) high energy neutrons; and
iv) low energy neutrons.

15. Use according to claim 14, wherein when detecting short wave UV radiation, further comprising admitting UV via a scintillator crystal or fibre optic bundle; and/or when detecting low energy neutrons, further comprising using an activation layer.
